# EUROPEAN PATENT APPLICATION

(11) **EP 4 778 400 A1**
(43) Date of publication of application: **22.07.2026**
(21) Application number: 25198887.9
(22) Date of filing: 29.08.2025
(51) Int. Cl.: A23G 9/04, A23G 9/12, A23G 9/22, B01F 35/21, B01F 35/212, G05D 19/00, G05D 23/00, G05D 23/19, A23G 9/28, H02P 6/06

(54) **COLD BEVERAGE MAKER AND CONTROL METHOD THEREOF**

(30) Priority: 16.01.2025 CN 202510073807
(71) Applicant: Guangdong Welly Electrical Appliances Co., Ltd., Zhongshan Guangdong 528400 (CN)
(72) Inventor: WU, Xiangan, Zhongshan (CN); MAI, Linjun, Zhongshan (CN); LIAO, Qiubo, Zhongshan (CN); HU, Wenzhan, Zhongshan (CN); MA, Yangyang, Zhongshan (CN)
(74) Representative: Sun, Yiming

(57) **Abstract**

The present disclosure provides a cold beverage maker and a control method thereof. The cold beverage maker includes a body, and a refrigeration mechanism, a stirring mechanism, a feed and discharge mechanism, and a main control apparatus that are provided on the body, where the feed and discharge mechanism includes a making cartridge, a discharge mechanism provided on one end of the making cartridge, and a temperature sensor provided in the making cartridge; the stirring mechanism includes a variable-speed motor apparatus and a stirring member; the variable-speed motor apparatus is connected to the stirring member in a transmission manner; the stirring member is provided in the making cartridge; and the main control apparatus is electrically connected to the refrigeration mechanism, the temperature sensor, and the variable-speed motor apparatus. The present disclosure can make a variety of cold beverage products with a good mouthfeel, achieving multiple uses in one machine.

## Description

### TECHNICAL FIELD

The present disclosure relates to the technical field of cold beverage makers, and in particular to a cold beverage maker and a control method thereof.

### BACKGROUND

Cold beverage makers are usually used to process liquid raw materials into icy products (such as smoothies and ice creams). A cold beverage maker generally includes a refrigeration system and a making system. The refrigeration system includes a compressor, a condenser, and an evaporator. The making system includes a motor rotating apparatus and a rotary scraper. In use, raw materials like beverage and milk are first poured into a feed hood and then refrigerated for heat transfer through the evaporator provided inside or outside a making cartridge. As the refrigeration process progresses, the raw materials gradually form a solid-liquid mixture. Meanwhile, the motor rotating apparatus drives the rotary scraper to stir the solid-liquid mixture inside the feed hood, in order to prevent the solid-liquid mixture from forming ice chunks and ensure that the solid-liquid mixture can form a smoothie, an ice cream or other products.

Some traditional cold beverage makers use a shaded pole motor to stir the solid-liquid mixture. However, the speed regulation accuracy and response efficiency of the shade-pole motor are relatively low, greatly affecting the stirring effect, making it unsuitable for scenarios with high speed regulation requirements and variability. For example, the stirring speed cannot be dynamically regulated according to the making needs of different products (such as smoothies or ice creams), and only a single type of frozen dessert can be made. Meanwhile, when a single motor stirring control logic is used for making the smoothie or ice cream, the ice cream or smoothie is usually stirred unevenly and clumped. When clumping occurs, the air content mixed into the insufficiently stirred ice cream or smoothie is low, causing the ice cream or smoothie to become thin, thereby affecting the hardness of the ice cream or smoothie and ultimately affecting the mouthfeel of the product.

### SUMMARY

A technical problem to be solved by the present disclosure is to provide a cold beverage maker and a control method thereof. The present disclosure can make a variety of cold beverage products with a good hardness and mouthfeel, achieving multiple uses in one machine.

**In** order to solve the above technical problem, the present disclosure provides a cold beverage maker, including a body, and a refrigeration mechanism, a stirring mechanism, a feed and discharge mechanism, and a main control apparatus that are provided on the body, where the feed and discharge mechanism includes a making cartridge, a discharge mechanism provided on one end of the making cartridge, and a temperature sensor provided in the making cartridge; and the refrigeration mechanism is configured to refrigerate the making cartridge; and
the stirring mechanism includes a variable-speed motor apparatus and a stirring member; the variable-speed motor apparatus is connected to the stirring member in a transmission manner; the stirring member is provided in the making cartridge; the temperature sensor is connected to the main control apparatus, and is configured to detect temperature data inside the making cartridge and send the temperature data to the main control apparatus; the main control apparatus is electrically connected to the refrigeration mechanism and the variable-speed motor apparatus, and is configured to: control, based on the temperature data and an input making function command, the refrigeration mechanism to provide a refrigeration environment of a preset function mode for a making space of the making cartridge, and control, based on the making function command, the variable-speed motor apparatus to adjust a rotation speed and direction of the stirring paddle in the preset function mode, thereby performing making operations for different cold beverage products.

As an improvement of the above solution, the refrigeration mechanism includes a compressor, a condenser, and an evaporator; the evaporator is provided in the making cartridge and provided with the temperature sensor; the stirring member surrounds a periphery of the evaporator; two ends of the compressor are respectively connected to an inlet end of the condenser and an outlet end of the evaporator through tubes; and an outlet end of the condenser is connected to an inlet end of the evaporator.

As an improvement of the above solution, an upper or middle-upper portion of the cold beverage maker includes a stirring region and a driving region in sequence from front to rear; the evaporator, the stirring member, and the making cartridge are provided in the stirring region; the variable-speed motor apparatus is provided in the driving region; the variable-speed motor apparatus includes a mounting bracket, a variable-speed motor, a reducer, a coupling, and a stirring shaft; and the mounting bracket is provided on an end of the making cartridge away from the discharge mechanism.

As an improvement of the above solution, the variable-speed motor apparatus includes a mounting bracket, a variable-speed motor, a reducer, a coupling, and a stirring shaft; the mounting bracket is provided on an end of the making cartridge away from the discharge mechanism; the variable-speed motor, the reducer, and the coupling are sequentially connected and provided on the mounting bracket; and the stirring shaft includes one end connected to the coupling and the other end passing through the evaporator and connected to a transmission connection portion of the stirring member in a transmission manner.

As an improvement of the above solution, an upper or middle-upper portion of the cold beverage maker further includes a driving heat dissipating region; and the driving region is provided between the stirring region and the driving heat dissipating region.

As an improvement of the above solution, the main control apparatus includes a main controller and a control panel; and the control panel is connected to the main controller, and is configured to send a function control command input by a user to the main controller.

As an improvement of the above solution, the making cartridge includes a guide portion; the guide portion is provided on an end close to the discharge mechanism inside the making cartridge; the guide portion is gradually tilted from an upper portion of the making cartridge towards the discharge mechanism; and an inner wall of the guide portion forms a concave surface; and
a transition connection portion is provided between an outer wall of the making cartridge and a feed port of the making cartridge; and the transition connection portion gradually extends from the outer wall of the making cartridge towards the feed port.

As an improvement of the above solution, the transition connection portion presents an arc-shaped or inclined transition; and a surface of the transition connection portion is a smooth surface.

As an improvement of the above solution, a width of the transition connection portion gradually increases from the outer wall of the making cartridge towards the feed port; and alternatively, the width of the transition connection portion gradually decreases from the outer wall of the making cartridge towards the feed port.

As an improvement of the above solution, the end close to the discharge mechanism inside the making cartridge is provided with a side end surface; the discharge mechanism is provided on the side end surface; an upper portion of the side end surface is connected to a lower portion of the guide portion to form a first connection line; an upper side wall of the making cartridge is connected to an upper portion of the guide portion to form two second connection lines; the two second connection lines are symmetrically inclined and bent from a top of the making cartridge to two sides of the guide portion; and the two second connection lines intersect with each other at one end, and the other ends of the two second connection lines are respectively bent and extend towards the two sides of the guide portion and are respectively connected to two ends of the first connection line.

As an improvement of the above solution, the making cartridge further includes a feed portion; the transition connection portion protrudes upward from a surface of the making cartridge, and is provided on an end away from the discharge mechanism inside the making cartridge; the feed port is provided on the feed portion; the feed portion is provided on the transition connection portion; the transition connection portion is internally provided with a feed chamber; the feed chamber communicates with a storage space; a size range of a longitudinal section of the feed chamber is greater than a size range of a longitudinal section of the storage space.

As an improvement of the above solution, the discharge mechanism includes a discharge hopper, a handle, and a discharge valve; the discharge hopper is provided on the side end surface; the side end surface is provided with a discharge port; the discharge port communicates with the discharge hopper; one end of the handle includes one side hinged to the discharge hopper and the other side hinged to the discharge valve; and the handle is able to drive the discharge valve to rise or fall so as to open or close the discharge hopper.

Correspondingly, the present disclosure further provides a control method of a cold beverage maker, applied to the above cold beverage maker, and including: acquiring current temperature data inside the making cartridge and a current making function command in real time, where the current making function command is any one of making function commands for different cold beverage products; pairing the current making function command with a preset function hardness level control library to acquire a function hardness level control rule set for a corresponding making function, where the function hardness level control rule set includes a function making command, a preset shape triggering rule, and a preset forming triggering rule for a corresponding hardness level; activating the refrigeration mechanism, and controlling the variable-speed motor to perform a stirring operation at the corresponding hardness level based on the function making command; controlling, when the current temperature data meets the preset shape triggering rule, the variable-speed motor to perform a shape adjustment operation at the corresponding hardness level; and controlling, when the current temperature data meets the preset forming triggering rule, the variable-speed motor and the refrigeration mechanism to perform a hardness maintenance operation at the corresponding hardness level.

As an improvement of the above solution, the current making function command includes a current function command and a current hardness level command; and the pairing the current making function command with a preset function hardness level control library to acquire a function hardness level control rule set for a corresponding making function includes: pairing the current function command with the preset hardness level control library to acquire a hardness level control library for the corresponding making function; and pairing the current hardness level command with the hardness level control library to acquire a corresponding function hardness level control rule set.

As an improvement of the above solution, the controlling the variable-speed motor to perform a stirring operation at a corresponding hardness level based on the function making command includes: controlling, when the function making command is an ice cream making command, the variable-speed motor to perform a stirring operation at a first preset speed and a single stirring direction; and controlling, when the function making command is a smoothie making command, the variable-speed motor to perform a stirring operation at a second preset speed and a single stirring direction.

As an improvement of the above solution, the controlling, when the current temperature data meets the preset shape triggering rule, the variable-speed motor to perform a shape adjustment operation at the corresponding hardness level includes: determining, when the preset shape triggering rule is an ice cream preset shape triggering rule, whether the current temperature data is within a first preset temperature threshold range; if yes, determining that the ice cream preset shape triggering rule is met, and controlling the motor to perform a stirring operation at a third preset speed by alternately switching forward and reverse stirring directions at a first preset time interval; and determining, when the preset shape triggering rule is a smoothie preset shape triggering rule, whether the current temperature data is within a second preset temperature threshold range; and if yes, determining that the smoothie preset shape triggering rule is met, and controlling the motor to perform a stirring operation at a fourth preset speed by alternately switching the forward and reverse stirring directions at a second preset time interval.

As an improvement of the above solution, the controlling, when the current temperature data meets the preset forming triggering rule, the variable-speed motor and the refrigeration mechanism to perform a hardness maintenance operation at the corresponding hardness level includes: determining, when the preset forming triggering rule is an ice cream preset forming triggering rule, whether the current temperature data is within a third preset temperature threshold range; if yes, determining that the ice cream preset forming triggering rule is met, and performing an ice cream hardness maintenance operation; and determining, when the preset forming triggering rule is a smoothie preset forming triggering rule, whether the current temperature data is within a fourth preset temperature threshold range; and if yes, determining that the smoothie preset forming triggering rule is met, and performing a smoothie hardness maintenance operation.

As an improvement of the above solution, the ice cream hardness maintenance operation includes the following steps: S1: deactivating the refrigeration mechanism and the variable-speed motor, and calculating a deactivation time; S2: controlling, when the deactivation time reaches a first preset time threshold, the variable-speed motor to perform a stirring operation at a fifth preset speed and a single stirring direction; S3: determining whether the current temperature data is less than a first preset temperature adjustment threshold; if yes, initializing the deactivation time, and returning to the step S1; if not, activating the refrigeration mechanism, and controlling the variable-speed motor to perform a stirring operation at a sixth preset speed by alternately switching the forward and reverse stirring directions at a third preset time interval; and S4: determining whether the current temperature data is less than a second preset temperature adjustment threshold; if yes, initializing the deactivation time, and returning to the step S1; and if not, continuing to activate the refrigeration mechanism, controlling the variable-speed motor to perform a stirring operation at a seventh preset speed by alternately switching the forward and reverse stirring directions at a fourth preset time interval, and returning to the step S4.

As an improvement of the above solution, the smoothie hardness maintenance operation includes the following steps: S10: performing an insulation maintenance operation based on a third preset temperature adjustment threshold, and measuring a time of an insulation state; S20: updating, when the time of the insulation state is greater than a second preset time threshold, the third preset temperature adjustment threshold, and performing an insulation maintenance operation; and S30: determining whether the third preset temperature adjustment threshold is less than or equal to a preset level insulation maintenance threshold; if yes, performing an insulation maintenance operation based on the level insulation maintenance threshold to maintain a current smoothie hardness; and if not, returning to the step S20.

As an improvement of the above solution, the insulation maintenance operation includes the following steps: S101: deactivating the refrigeration mechanism when the current temperature data is less than or equal to a temperature threshold; S102: activating the refrigeration mechanism when the current temperature data is greater than the temperature threshold and a refrigeration deactivation time is greater than a third preset time threshold of a current level; and S103: deactivating the refrigeration mechanism when the current temperature data is less than or equal to the temperature threshold and a refrigeration activation time is greater than a fourth preset time threshold of the current level, and returning to the step S102, where the temperature threshold is the third preset temperature adjustment threshold or the level insulation maintenance threshold.

As an improvement of the above solution, the updating the third preset temperature adjustment threshold includes: updating the third preset temperature adjustment threshold of the current level based on a temperature update rule of the current level, and updating the second preset time threshold based on a time update rule of the current level.

As an improvement of the above solution, the temperature update rule of the current level comprises: acquiring, according to a temperature update calculation equation T0=T-T1, a new third preset temperature adjustment threshold of the current level, wherein T0 is the third preset temperature adjustment threshold of the updated current level, T is the third preset temperature adjustment threshold of the current level before updating, and T1 is a temperature adjustment threshold of the current level; and the time update rule of the current level comprises:
acquiring, according to a time update calculation equation t0=t+t1, a new second preset time threshold, wherein t0 is the second preset temperature adjustment threshold of the updated current level, t is the second preset time threshold of the current level before updating, and t1 is a time adjustment threshold of the current level.

As an improvement of the above solution, the smoothie hardness maintenance operation further includes: acquiring a current speed of the motor in the insulation state in real time; deactivating a refrigeration operation when the current speed of the motor is greater than or equal to an eighth preset speed; and activating the refrigeration operation when the current speed of the motor is greater than or equal to a ninth preset speed and a temperature activation condition is triggered, where the temperature activation condition is that when the current temperature data is greater than the temperature threshold and the refrigeration deactivation time is greater than a fifth preset time threshold of a current level, the temperature threshold is a preset temperature threshold or level insulation maintenance threshold of the current level.

The implementation of the present disclosure has the following beneficial effects:
In the present disclosure, the refrigeration mechanism is controlled to provide a refrigeration environment of a preset function mode for the making space of the making cartridge based on the temperature data and the input making function command. **The** variable-speed motor apparatus is controlled to adjust the rotation speed and direction of the stirring paddle in the preset function mode based on the making function command, thereby performing making operations for different cold beverage products. Therefore, the present disclosure meets the needs of the user for multiple uses in one machine.

Meanwhile, the present disclosure adopts different motor stirring control logics in different operating states to avoid local clumps or large particles of the material during production. In this way, the present disclosure can maintain the overall shape and hardness of the material, thereby improving the mouthfeel after discharge and meeting the actual needs of the user.

Secondly, during the stirring process, the solid-liquid mixture will move to the front end of the making cartridge. In order to facilitate the smooth reflux of the solid-liquid mixture at the front end of the making cartridge, the making cartridge further includes a guide portion. The guide portion is gradually tilted from the upper portion of the making cartridge towards the discharge mechanism. In this way, the guide portion can guide the solid-liquid mixture to move upward to the upper portion of the making cartridge and obliquely move to the middle portion of the making cartridge, thereby achieving the reflux of the smoothie. The inner wall of the guide portion forms a concave surface, which is not easy to form a retention corner. Therefore, products like ice creams with smaller particles are less likely to be retained in the guide portion, making it easy for the reflux of the formed small-particle solid-liquid mixture. The design is suitable for the reflux of smoothies and ice creams, and improves the stirring efficiency and effect.

### BRIEF DESCRIPTION OF THE DRAWINGS

FIG. 1 is an exploded structural schematic diagram of a cold beverage maker according to the present disclosure;
FIG. 2 is a structural schematic diagram of electric control logic of a main control apparatus according to the present disclosure;
FIG. 3 is a cross-sectional split structural schematic diagram of a feed and discharge mechanism according to the present disclosure;
FIG. 4 is a structural schematic diagram of a making cartridge according to the present disclosure;
FIG. 5 is a structural schematic diagram of a refrigerating assembly according to the present disclosure;
FIG. 6 is a flowchart of a control method of the cold beverage maker according to the present disclosure;
FIG. 7 is a flowchart of an ice cream hardness maintenance operation according to the present disclosure;
FIG. 8 is a flowchart of a smoothie hardness maintenance operation according to the present disclosure; and
FIG. 9 is a flowchart of an insulation maintenance operation according to the present disclosure.

### DETAILED DESCRIPTION

In order to make the objectives, technical solutions, and advantages of the present disclosure more clear, the present disclosure will be further described in detail below with reference to the drawings.

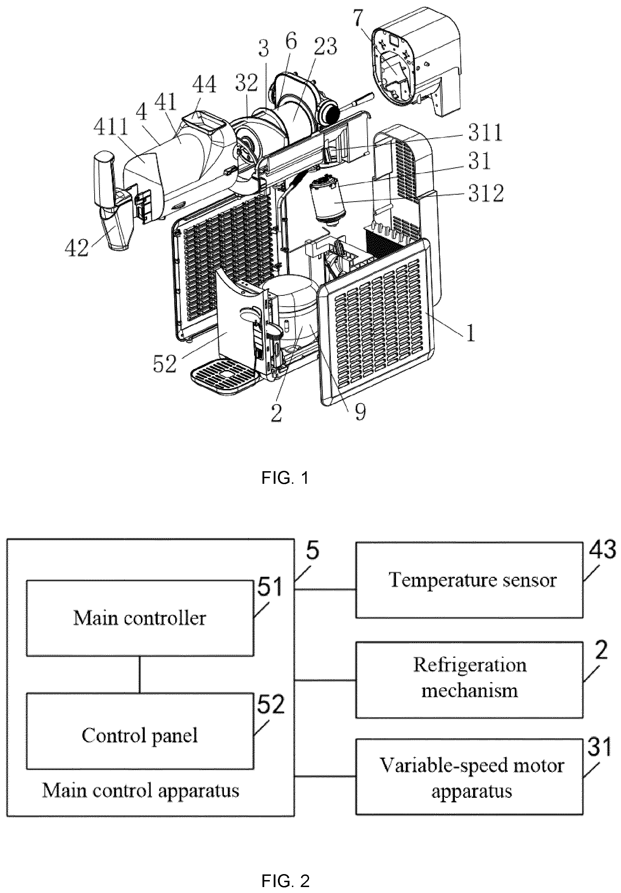

As shown in FIGS. 1 to 3, a specific embodiment of the present disclosure provides a cold beverage maker, including a body 1, and a refrigeration mechanism 2, a stirring mechanism 3, a feed and discharge mechanism 4, and a main control apparatus 5 that are provided on the body 1. The feed and discharge mechanism 4 includes a making cartridge 41, a discharge mechanism 42 provided on one end of the making cartridge 41, and a temperature sensor 43 provided in the making cartridge 41. The making cartridge 41 is able to accommodate a raw material for making a cold beverage and a formed solid-liquid mixture. The making cartridge 41 is provided with a feed port 441, and the raw material is poured into the making cartridge through the feed port 441. The discharge mechanism 42 is configured to output the formed solid-liquid mixture, which is, for example, a smoothie or ice cream.

The refrigeration mechanism 2 is configured to refrigerate the making cartridge 41, so as to keep the material in a low-temperature forming environment. The stirring mechanism 3 includes a variable-speed motor apparatus 31 and a stirring member 32. The variable-speed motor apparatus 31 is connected to the stirring member 32 in a transmission manner. The stirring member 32 is provided in the making cartridge 41. The variable-speed motor apparatus 31 is able to drive the stirring member 32 to rotate inside the making cartridge 41, thereby stirring the material. The variable-speed motor apparatus 31 can achieve stepless speed regulation, with a wide speed regulation range and good smoothness, effectively achieving speed regulation operation for different functions or states. For example, as for smoothies and ice creams with different speed regulation requirements, ice creams require a higher stirring rate than smoothies.

The temperature sensor 43 is connected to the main control apparatus 5, and is configured to detect temperature data inside the making cartridge 41 and send the temperature data to the main control apparatus 5. The main control apparatus 5 is electrically connected to the refrigeration mechanism 2 and the variable-speed motor apparatus 31, and is configured to control the refrigeration mechanism 2 to provide a refrigeration environment of a preset function mode for a making space of the making cartridge 41 based on the temperature data and an input making function command. The main control apparatus is further configured to control the variable-speed motor apparatus 31 to adjust a rotation speed and direction of the stirring paddle 32 in the preset function mode based on the making function command, thereby performing making operations for different cold beverage products. For example, when a smoothie or ice cream function command is input, the refrigeration mechanism 2 is controlled based on the detected temperature data to perform refrigeration operation at a corresponding function temperature, and the variable-speed motor apparatus 31 is controlled to perform a stirring operation in a corresponding function stirring mode. In this way, the raw material is thoroughly and uniformly refrigerated and stirred with air, improving the shape of the ice cream or smoothie, ensuring their forming hardness, and thereby achieving the making of the smoothie or ice cream. By adjusting different operating temperatures and stirring modes, the making functions of different cold beverage products are achieved to meet the need of the user for multiple uses in one machine.

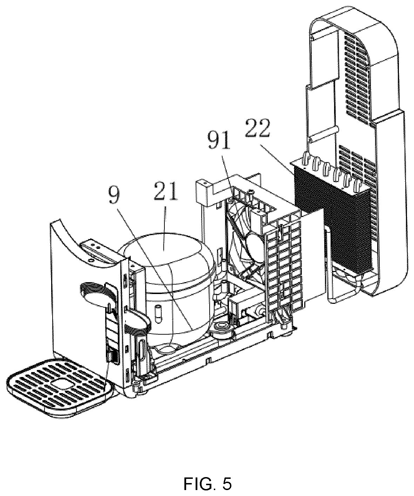

Specifically, as shown in FIGS. 1, 3, and 5, the refrigeration mechanism 2 includes a compressor 21, a condenser 22, and an evaporator 23. The evaporator 23 is provided in the making cartridge 41. The evaporator is provided with the temperature sensor. The stirring member 32 surrounds a periphery of the evaporator 23. Two ends of the compressor 21 are respectively connected to an inlet end of the condenser 22 and an outlet end of the evaporator 23 through tubes. An outlet end of the condenser 22 is connected to an inlet end of the evaporator 23. When the compressor 21 is operating for refrigeration, it supplies cold to the evaporator 23, thereby supplying cold to an internal space of the making cartridge 41 and the material through the evaporator 23. The stirring member 32 fitted onto the evaporator 23 stirs the material to ensure stable operation of low-temperature processing of the smoothie or ice cream.

Furthermore, as shown in FIGS. 1, 3, and 5, an upper or middle-upper portion of the cold beverage maker includes a stirring region 6 and a driving region 7 in sequence from front to rear. The evaporator 23, the stirring member 32, and the making cartridge 41 are provided in the stirring region 6. The variable-speed motor apparatus is provided in the driving region 7. The variable-speed motor apparatus 31 includes a mounting bracket 311, a variable-speed motor 312, a reducer 313, a coupling 314, and a stirring shaft 315. The mounting bracket 311 is provided on an end of the making cartridge 41 away from the discharge mechanism 42. The variable-speed motor 312, the reducer 313, and the coupling 314 are sequentially connected and provided on the mounting bracket 311. The stirring shaft 315 includes one end connected to the coupling 314 and the other end passing through the evaporator 23 and connected to a transmission connection portion 321 of the stirring member 32 in a transmission manner. The variable-speed motor 312 drives the stirring member 32 to stir the material in the making cartridge 41, thereby achieving stepless speed regulation stirring, meeting the requirements of scenarios with high speed regulation accuracy and variability. The variable-speed motor 312 is tilted inside the body 1 to reduce its volume occupancy, thereby reducing the volume of the body 1.

An upper or middle-upper portion of the cold beverage maker further includes a driving heat dissipating region 8. The driving region 7 is provided between the stirring region 6 and the driving heat dissipating region 8. The driving heat dissipating region 8 includes a driving cooling fan. The driving cooling fan can extract operating heat from the driving region outside the body to reduce an operating temperature of the driving region.

A lower portion of the cold beverage maker is provided with a refrigerating region 9. The compressor 21, the condenser 22, and a cooling fan 91 are provided in the refrigerating region. The cooling fan 91 is provided on one side of the condenser 22, and is configured to extract operating heat from the heat dissipating region 9 outside the body to reduce an operating temperature of the heat dissipating region.

The variable-speed motor 312 is preferably a variable-speed direct current (DC) motor, but it is not limited herein.

Preferably, as shown in FIG. 2, the main control apparatus 5 includes a main controller 51 and a control panel 52. The control panel 52 is connected to the main controller 51, and is configured to send a function control command input by a user to the main controller 51 so as to achieve different functions. In other embodiments, the main control apparatus 5 may further include a wireless communication terminal. The main controller 51 can be connected to an external remote controller or mobile terminal through the wireless communication terminal, so as to achieve a wireless control function.

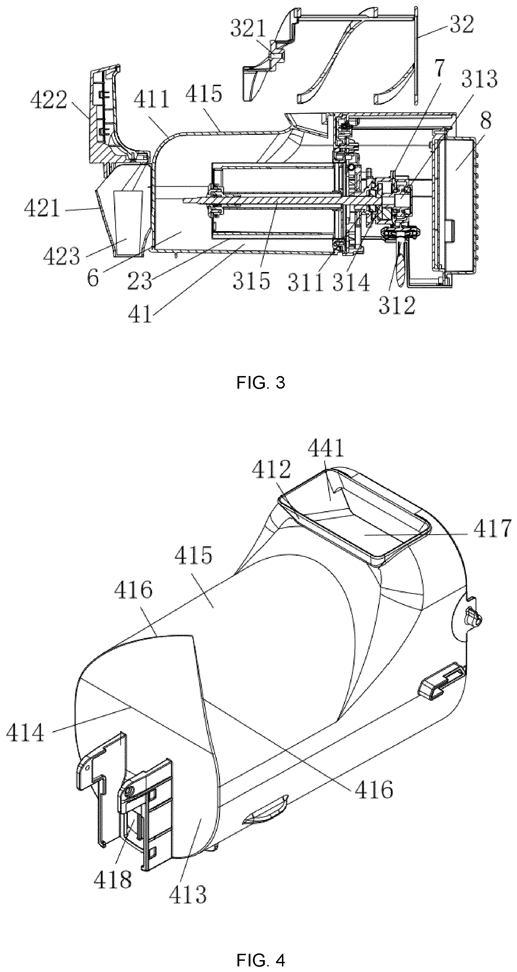

In order to facilitate the flow of the formed product at a front end of the making cartridge 41, as shown in FIGS. 1 and 3, the making cartridge 41 includes a guide portion 411. The guide portion 411 is provided on an end close to the discharge mechanism 42inside the making cartridge 41, that is, at the front end of the making cartridge 41. The guide portion 411 is gradually tilted from an upper portion of the making cartridge 41 towards the discharge mechanism 42. Under the guiding effect of the inclined guide portion 411, the product formed flows from a side of the discharge mechanism 42 to the upper portion of the making cartridge 41, without affecting the product flowing from a middle portion of the making cartridge 41 to the discharge mechanism 42. Under the action of a continuous squeezing force, the smoothie in the guide portion 411 can continuously flow back from the upper portion of the making cartridge 41 to the middle portion, thereby forming a circulation. An ice cream with smaller particles tends to retain in a small corner. However, an inner wall of the guide portion 411 forms a concave surface. Compared to a connection between a flat surface and the making cartridge 41, a connection between the concave surface and the making cartridge 41 is less likely to generate a retention corner, making it easier for the ice cream with smaller ice crystal particles to flow smoothly. Therefore, the cold beverage maker of the present disclosure is applicable to products like smoothies and ice creams. By refluxing the smoothie and ice cream, the present disclosure improves the stirring efficiency and effect.

Furthermore, as shown in FIGS. 1 and 4, a transition connection portion 412 is provided between an outer wall of the making cartridge 41 and the feed port 441 of the making cartridge 41. The transition connection portion 412 is configured to form a transition connection between the feed port 441 and the making cartridge 41. The transition connection portion 412 gradually extends from the outer wall of the making cartridge 41 towards the feed port 441. After the raw material is frozen to form the solid-liquid mixture, the solid-liquid mixture is accommodated in the transition connection portion 412 and gradually stirred and pushed forward from the transition connection portion 412. The solid-liquid mixture can be pushed to a discharge port 418. The purpose of designing the transition connection portion 412 is to increase the accommodation volume and facilitate the reflux of the solid-liquid mixture from the upper portion of the making cartridge 41.

Specifically, the inner wall of the guide portion 411 is a concave continuous surface. Through the concave continuous surface, the smoothie or ice cream can smoothly flow back and move from the discharge mechanism 42 to the upper portion of the making cartridge 41. The design facilitates the reflux of the solid-liquid mixture, thereby forming a circulation of the solid-liquid mixture inside the making cartridge 411.

In some embodiments, the transition connection portion 412 presents an arc-shaped or inclined transition. The shape of the arc-shaped or inclined transition enables the solid-liquid mixture to smoothly move from the feed port 441 gradually to the middle portion of the making cartridge 411 and move gradually to a position neighboring to the discharge port 418. Furthermore, a surface of the transition connection portion 412 is a smooth surface. The smooth surface can reduce the frictional force of the solid-liquid mixture in the transition connection portion 412. On the one hand, the design facilitates the movement of the solid-liquid mixtures at the transition connection portion 412, making it easy to stir and push the material. On the other hand, the design reduces the accumulation and retention of the solid-liquid mixture at the transition connection portion 412.

In some embodiments, a width of the transition connection portion 412 gradually increases from the outer wall of the making cartridge 41 towards the feed port 441, and the transition connection portion 412 forms a gradually concentrated channel in a direction away from the feed port 441. This facilitates the concentrated movement of the solid-liquid mixture to the middle portion of the making cartridge 41. In some other embodiments, the width of the transition connection portion 412 gradually decreases from the outer wall of the making cartridge 41 towards the feed port 441, allowing the transition connection portion 412 to accommodate more of the solid-liquid mixture.

Preferably, an outer contour of a cross-section of the making cartridge 41 is a circular, elliptical, or quasi-elliptic shape formed by a smooth curve. A quasi-ellipse refers to a closed curved shape that involves the concepts of major and minor axes, but differs from a standard ellipse in terms of edge curvature and symmetry, etc. The outer contour of the cross-section increases the storage space of the making cartridge 41. Meanwhile, the closed contour formed by the smooth curve reduces the frictional force of the solid-liquid mixture on the inner wall of the making cartridge 41, thereby reducing accumulation and retention, etc. Therefore, the design is conducive to uniform stirring and improves the stirring effect.

As shown in FIG. 4, the end close to the discharge mechanism 42 inside the making cartridge 41 is provided with a side end surface 413. The discharge mechanism 42 is provided on the side end surface 413, and the squeezed solid-liquid mixture will concentrate on the side end surface 413. An upper portion of the side end surface 413 is connected to a lower portion of the guide portion 411.

In this embodiment, the upper portion of the side end surface 413 is connected to the lower portion of the guide portion 411 in a tangential manner. The solid-liquid mixture can smoothly transfer from the side end surface 413 to the upper portion of the making cartridge 41 along a connection between the side end surface 413 and the guide portion 411. A connection line between the side end surface 413 and the guide portion 411 forms a first connection line 414. The solid-liquid mixture undergoes a first turn in the first connection line 414, causing the solid-liquid mixture to transfer from the side end surface 413 to the upper portion of the making cartridge 411.

A side wall of the making cartridge 41 is provided with a cartridge body surface 415. The cartridge body surface 415 forms a main side wall of the making cartridge 41. The cartridge body surface 415 is connected to an upper portion of the guide portion 411. In this embodiment, the cartridge body surface 415 is connected to the upper portion of the guide portion 411 in a tangential manner. The solid-liquid mixture flows along the guide portion 411 and smoothly moves from the upper portion of the guide portion 411 to a junction of the cartridge body surface 415. Connection lines between the cartridge body surface 415 and the guide portion 411 forms second connection lines 416. The solid-liquid mixture undergoes a second turn in the second connection line 416, such that the solid-liquid mixture flows back to the middle portion of the making cartridge 411, thereby forming a circulation.

In the embodiment of the present disclosure, there are two second connection lines 416, which are symmetrically inclined and bent from a top of the making cartridge 41 to two sides of the guide portion 411. The two second connection lines 416 are provided to guide the movement of the solid-liquid mixture from the two symmetrical sides of the guide portion 411. Meanwhile, the inclined and bent design can reduce the space for the solid-liquid mixture of a product like an ice cream with small ice crystal particles to retain in the guide portion 411, thereby improving the reflux smoothness of the solid-liquid mixture.

Furthermore, the two second connection lines 416 intersect with each other at one end, and the other ends of the two second connection lines are respectively bent and extend towards two sides of the guide portion 411 and are respectively connected to two ends of the first connection line 414. Along a reflux direction of the solid-liquid mixture, the two second connection lines 416 converge and intersect from the two ends of the first connection line 414 towards the upper portion of the making cartridge 41. Thus, the solid-liquid mixture can concentrate and converge to a center of the upper portion of the making cartridge 41 when it moves in the guide portion 411, forming a concentrated reflux path. In this way, the overall cross-section of the refluxed solid-liquid mixture is small. Under a constant flow rate, the reflux velocity of the solid-liquid mixture is increased, thereby accelerating the reflux velocity. In addition, the solid-liquid mixture in a stirred state can smoothly move to the side end surface 413, ensuring the reflux efficiency and stirring effect.

As shown in FIGS. 1, 3, and 4, the making cartridge 41 further includes a feed portion 44. The feed portion 44 is provided on the transition connection portion 412. The feed port 441 is provided on the feed portion 44. The transition connection portion 412 protrudes upward from the cartridge body surface 415 of the making cartridge 41 and is provided on an end away from the discharge mechanism 42 inside the making cartridge 41. The design expands the space for accommodating the raw material, easily increasing the amount of the material fed, and ensuring that the material fed is fully frozen and stirred.

The transition connection portion 412 is internally provided with a feed chamber 417. The feed chamber 417 communicates with a storage space of the making cartridge 41. When the raw material is fed, the raw material first enters the feed chamber 417 and then enters the storage space. A diameter of a longitudinal section of the feed chamber 417 is greater than a maximum diameter of a longitudinal section of the storage space, which increases the volume of the raw material and the solid-liquid mixture accommodated in the making cartridge 411.

Furthermore, the discharge mechanism 42 includes a discharge hopper 421, a handle 422, and a discharge valve 423. The discharge hopper 421 is provided on the side end surface 413. The side end surface 413 is provided with the discharge port 418. The discharge port 418 communicates with the discharge hopper 421. One end of the handle 422 includes one side hinged to the discharge hopper 421 and the other side hinged to the discharge valve 423. The handle 422 is able to swing relative to the discharge hopper 421. When the handle 422 swings, the handle 422 drives the discharge valve 423 to rise or fall to open or close the discharge hopper 421, achieving the effect of discharge or closing the discharge hopper 421.

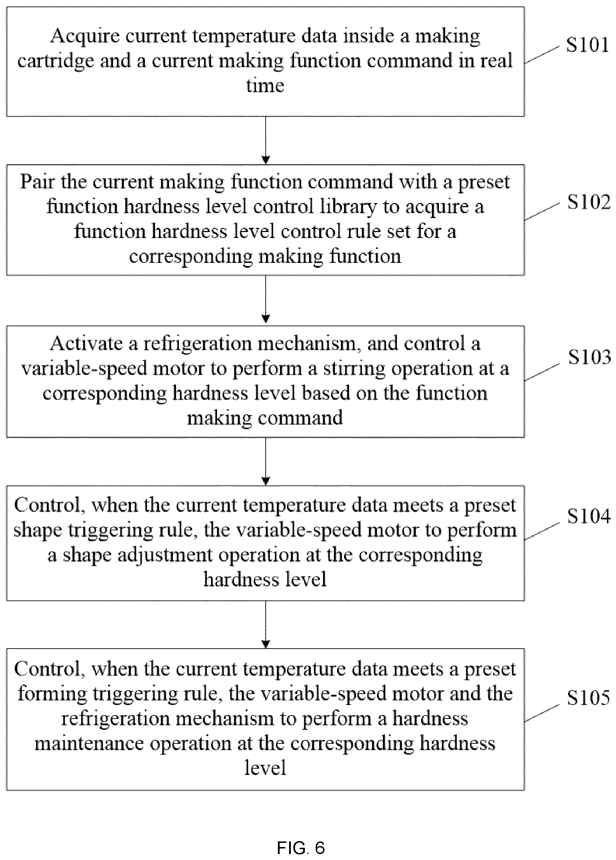

Correspondingly, as shown in FIG. 6, the present disclosure further provides a control method of a cold beverage maker, applied to the above cold beverage maker, and including the following steps.

S101. Current temperature data inside the making cartridge and a current making function command are acquired in real time.

**It** should be noted that the temperature sensor provided on the making cartridge detects the current temperature data inside the making cartridge in real time. When a user inputs a making control signal, a corresponding current material function command is acquired. **The** current making function command is any one of making function commands for different cold beverage products. For example, the current making function command includes at least an ice cream function command or a smoothie function command, but it is not limited herein. **The** ice cream function command includes making commands for making smoothies of different raw materials, such as ice creams made of coffee, cola, milk, or a mixed raw material. **The** smoothie function command includes making commands for making smoothies of different raw materials, such as smoothies made of coffee, cola, milk, or a mixed raw material. In a preset function hardness level control library, the making commands for making smoothies of different raw materials and the making commands for making ice creams of different raw materials are respectively matched with hardness level control libraries for corresponding making functions and function hardness level control rule sets for different hardness levels. Different control mode parameters are executed for different making commands of a same function (such as smoothie or ice cream function) when executing following corresponding making operation.

S102. The current making function command is paired with the preset function hardness level control library to acquire the function hardness level control rule set for a corresponding making function. The function hardness level control rule set includes a function making command, a preset shape triggering rule, and a preset forming triggering rule for a corresponding hardness level.

Specifically, the current making function command includes a current function command and a current hardness level command. That is, the ice cream function command and the smoothie function command each include a corresponding current function command and current hardness level command. Any ice cream or smoothie function corresponds to making commands for different hardness levels, that is, different hardness level commands.

The current making function command is paired with the preset function hardness level control library to acquire the function hardness level control rule set for a corresponding making function. This process is specifically as follows.

Step 1. The current function command is paired with the preset function hardness level control library to acquire the hardness level control library for the corresponding making function.

Step 2. The current hardness level command is paired with the hardness level control library to acquire the corresponding function hardness level control rule set.

It should be noted that the function hardness level control library includes hardness level control libraries for different functions. When the current function command is successfully paired with the preset function hardness level control library, the hardness level control library corresponding to the smoothie or ice cream function is acquired. When the current hardness level command required by the user is successfully paired with the preset function hardness level control library, the function hardness level control rule set for the corresponding hardness level of the smoothie or ice cream function is acquired. In this way, the corresponding hardness making of the smoothie or ice cream is achieved.

S103. The refrigeration mechanism is activated, and the variable-speed motor is controlled to perform a stirring operation at a corresponding hardness level based on the function making command.

Specifically, the process that the variable-speed motor is controlled to perform a stirring operation at a corresponding hardness level based on the function making command is as follows.

Step 1. When the function making command is an ice cream making command, the variable-speed motor is controlled to perform a stirring operation at a first preset speed and a single stirring direction.

Step 2. When the function making command is a smoothie making command, the variable-speed motor is controlled to perform a stirring operation at a second preset speed and a single stirring direction.

It should be noted that when the function making command is an ice cream making command, ice cream making is performed. When making starts, the compressor is first activated for rapid pre-cooling, and the motor is controlled to stir the material at the first preset speed and the single stirring direction. In a stirred state, the material is fully and uniformly refrigerated, effectively preventing local clump or particle formation, thereby effectively improving the effect of subsequently forming the material into an ice cream.

Preferably, the first preset speed is preferably 130 ± 5 rpm, but it is not limited herein and can be adjusted according to actual conditions.

Preferably, the single stirring direction is preferably a forward rotation direction, namely a clockwise rotation direction, but it is not limited herein and can be adjusted according to actual conditions.

Correspondingly, when the function making command is a smoothie making command, smoothie making is performed. The process of smoothie making is similar to the above process of ice cream making except for the following difference. That is, during the process of smoothie making, the motor is controlled to perform a stirring operation at a different second preset speed to achieve the desired stirring effect for making the smoothie.

Preferably, the second preset speed is preferably 80 ± 5 rpm, but it is not limited herein and can be adjusted according to actual conditions.

S104. When the current temperature data meets the preset shape triggering rule, the variable-speed motor is controlled to perform a shape adjustment operation at the corresponding hardness level.

Specifically, the process that when the current temperature data meets the preset shape triggering rule, the variable-speed motor is controlled to perform a shape adjustment operation at the corresponding hardness level is as follows.

Step 1. When the preset shape triggering rule is an ice cream preset shape triggering rule, it is determined whether the current temperature data is within a first preset temperature threshold range. If yes, it means that the ice cream preset shape triggering rule is met, and the motor is controlled to perform a stirring operation at a third preset speed by alternately switching forward and reverse stirring directions at a first preset time interval.

Step 2. When the preset shape triggering rule is a smoothie preset shape triggering rule, it is determined whether the current temperature data is within a second preset temperature threshold range. **If** yes, it means that the smoothie preset shape triggering rule is met, and the motor is controlled to perform a stirring operation at a fourth preset speed by alternately switching the forward and reverse stirring directions at a second preset time interval.

**It** should be noted that when the preset shape triggering rule is the ice cream preset shape triggering rule and the current temperature data is within the first preset temperature threshold range, it means that the ice cream preset shape triggering rule is met, such that the material begins to enter an ice cream shape adjustment stage. It is necessary to adjust the shape and expansion rate of the ice cream during forming in a timely manner to avoid the mouthfeel being reduced. At this point, if a single stirring logic is still maintained, there will be non-uniform stirring and clumping of the ice cream. When clumping occurs, the air content stirred into the insufficiently stirred ice cream is relatively low, which directly affects the shape and reduces the expansion rate of the ice cream during forming, resulting in a worse mouthfeel. In view of this, the present disclosure controls the motor to stir the material at the third preset speed, and alternately switches the forward and reverse stirring directions at the first preset time interval, that is, alternately switches the clockwise and counterclockwise rotation directions. In this case, a stirring blade pushes the material back and forth at the first preset time interval, such that the material still maintains uniform refrigeration and sufficient air mixing, thereby improving the expansion rate and shape of the ice cream and enhancing the mouthfeel. Meanwhile, the second preset speed is lower than the first preset speed. Reducing the stirring speed at this stage alleviates the thinning problem caused by stirring and further improves the shape of the ice cream during forming. If not, it means that the ice cream preset shape triggering rule is not met and the making operation continues.

Preferably, the first preset temperature threshold range is preferably 0 ± 0.3°C, but it is not limited herein and can be adjusted according to actual conditions.

Preferably, the third preset speed is preferably 80 ± 5 rpm, but it is not limited herein and can be adjusted according to actual conditions.

Preferably, the first preset time interval is preferably 60 s, but it is not limited herein and can be adjusted according to actual conditions. In the above stage of this embodiment, the motor speed is reduced to 80 RPM**,** and the material is continuously stirred alternately at a time interval of 60 s in the forward direction and 60 s in the reverse direction. The design improves the expansion rate and shape of the ice cream during forming, thereby enhancing the mouthfeel of the ice cream.

Correspondingly, when the preset shape triggering rule is the smoothie preset shape triggering rule and the current temperature data is within the second preset temperature threshold range, it means that the smoothie preset shape triggering rule is met. The material begins to enter a smoothie shape adjustment stage, and an operation similar to the above ice cream operation is performed to adjust the shape of the smoothie during forming and improve its hardness. Differently, during smoothie making, the motor is controlled to perform a stirring operation at the fourth preset speed by alternately switching the forward and reverse stirring directions at the second preset time interval.

Preferably, the second preset temperature threshold range is preferably 0 ± 0.1°C, but it is not limited herein and can be adjusted according to actual conditions.

Preferably, the fourth preset speed is preferably 40 ± 5 rpm, but it is not limited herein and can be adjusted according to actual conditions.

Preferably, the second preset time interval is preferably 40 s, but it is not limited herein and can be adjusted according to actual conditions. In the above stage of this embodiment, the motor speed is reduced to 40 RPM, and the material is continuously stirred alternately at a time interval of 40 s in the forward direction and 40 s in the reverse direction. The design improves the shape and hardness of the smoothie, thereby enhancing the mouthfeel of the smoothie.

S105. When the current temperature data meets the preset forming triggering rule, the variable-speed motor and the refrigeration mechanism are controlled to perform a hardness maintenance operation at the corresponding hardness level.

Specifically, the process that when the current temperature data meets the preset forming triggering rule, the variable-speed motor and the refrigeration mechanism are controlled to perform a hardness maintenance operation at the corresponding hardness level is as follows.

Step 1. When the preset forming triggering rule is an ice cream preset forming triggering rule, it is determined whether the current temperature data is within a third preset temperature threshold range. If yes, it means that the ice cream preset forming triggering rule is met, and an ice cream hardness maintenance operation is performed.

Step 2. When the preset forming triggering rule is a smoothie preset forming triggering rule, it is determined whether the current temperature data is within a fourth preset temperature threshold range. If yes, it means that the smoothie preset forming triggering rule is met, and a smoothie hardness maintenance operation is performed.

It should be noted that when the ice cream or smoothie preset forming triggering rule is met, the ice cream or smoothie forming maintenance operation is performed to ensure that the overall hardness of the ice cream or smoothie meets the production requirement, thereby enhancing the mouthfeel.

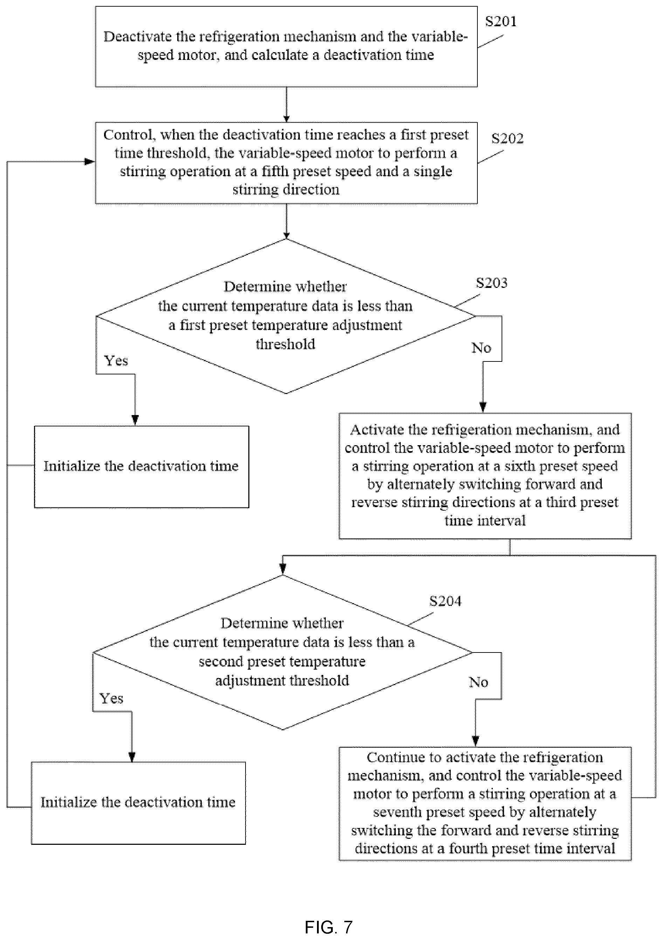

As shown in FIG. 7, the ice cream hardness maintenance operation includes the following steps.

S201. The refrigeration mechanism and the variable-speed motor are deactivated, and a deactivation time is calculated.

It should be noted that at a time when the ice cream is formed, the compressor and the motor are deactivated and the ice cream enters an insulation maintenance state to maintain the shape and mouthfeel of the ice cream, and the deactivation time is calculated.

S202. When the deactivation time reaches the first preset time threshold, the variable-speed motor is controlled to perform a stirring operation at a fifth preset speed and a single stirring direction.

It should be noted that in the present disclosure, in the insulation state, in order to maintain a good mouthfeel and shape of the ice cream, that is, to ensure that the ice cream is not too hard or too soft, the motor is controlled to perform low-speed stirring operation on the ice cream at the fifth preset speed and the single stirring direction, thereby maintaining a good mouthfeel and shape of the ice cream.

Preferably, the fifth preset speed is preferably 80 ± 5 rpm, but it is not limited herein and can be adjusted according to actual conditions.

Preferably, the single stirring direction is preferably a forward rotation direction, namely a clockwise rotation direction, but it is not limited herein and can be adjusted according to actual conditions.

S203. It is determined whether the current temperature data is less than a first preset temperature adjustment threshold. If yes, the deactivation time is initialized, and the operation returns to the step S201. If not, the refrigeration mechanism is activated, and the variable-speed motor is controlled to perform a stirring operation at a sixth preset speed by alternately switching the forward and reverse stirring directions at a third preset time interval.

It should be noted that the temperature of the ice cream is continuously monitored. When the current temperature data is less than the first preset temperature adjustment threshold, it means that the temperature is too low in the beginning, which will cause the ice cream to harden, thereby affecting the mouthfeel. **In** this case, the operation returns to the step S201 to deactivate the refrigeration and stirring operation, thereby gradually increasing the temperature of the ice cream. When the current temperature data is greater than or equal to the first preset temperature adjustment threshold, it means that the temperature is too high in the beginning, which will cause the ice cream to become soft. In this case, the compressor is controlled to continue the refrigeration operation, and the motor is controlled to stir the ice cream at the sixth preset speed by alternately switching the forward and reverse stirring directions at the third preset time interval. The stirring blade pushes the ice cream back and forth at the third preset time interval, thereby maintaining a uniform refrigeration effect and optimal shape of the ice cream as a whole, ensuring that the overall hardness of the ice cream meets production and customer needs.

Preferably, the first preset temperature adjustment threshold is preferably -4 ± 0.2°C, but it is not limited herein and can be adjusted according to actual conditions.

Preferably, the sixth preset speed is preferably 80 ± 5 rpm, but it is not limited herein and can be adjusted according to actual conditions.

Preferably, the third preset time interval is preferably 60 s, but it is not limited herein and can be adjusted according to actual conditions.

S204. It is determined whether the current temperature data is less than a second preset temperature adjustment threshold. If yes, the deactivation time is initialized, and the operation returns to the step S1. If not, the refrigeration mechanism is activated, and the variable-speed motor is controlled to perform a stirring operation at a seventh preset speed by alternately switching the forward and reverse stirring directions at a fourth preset time interval. Then, the operation returns to the step S204.

It should be noted that the temperature of the ice cream is continuously monitored. When the current temperature data is less than the second preset temperature adjustment threshold, it means that the temperature is too low, which will cause the final ice cream to harden and affect the mouthfeel thereof. In this case, the operation returns to the step S201 to deactivate the refrigeration and stirring operation and resume the hardness maintenance operation. When the current temperature data is greater than or equal to the second preset temperature adjustment threshold, it means that the temperature is too high, which will cause the final ice cream to become soft. In this case, the compressor is controlled to continue the refrigeration operation, and the motor is controlled to stir the ice cream at the seventh preset speed by alternately switching the forward and reverse stirring directions at the fourth preset time interval. The stirring blade pushes the ice cream back and forth at the fourth preset time interval, thereby maintaining a uniform refrigeration effect and optimal shape of the ice cream as a whole, ensuring that the overall hardness of the ice cream meets production and customer needs. Therefore, the design ensures that the mouthfeel meets requirements.

Preferably, the second preset temperature adjustment threshold is preferably -2 ± 0.2°C, but it is not limited herein and can be adjusted according to actual conditions.

Preferably, the seventh preset speed is preferably 80 ± 5 rpm, but it is not limited herein and can be adjusted according to actual conditions.

Preferably, the fourth preset time interval is preferably 60 s, but it is not limited herein and can be adjusted according to actual conditions.

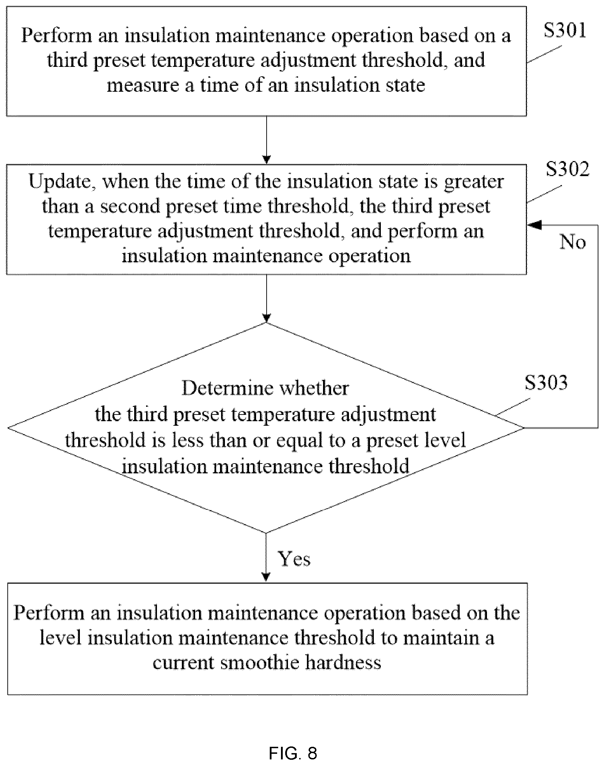

As shown in FIG. 8, the smoothie hardness maintenance operation includes the following steps.

S301. An insulation maintenance operation is performed based on a third preset temperature adjustment threshold, and a time of an insulation state is measured.

It should be noted that when the current temperature data inside an ice-making chamber reaches the third preset temperature adjustment threshold of the current level, the smoothie enters the insulation state. According to the third preset temperature adjustment threshold of the current level, an insulation maintenance operation is performed to insulate the smoothie at the preset temperature threshold in the ice-making chamber, and the time of the insulation state is measured.

S302. When the time of the insulation state is greater than the second preset time threshold, the third preset temperature adjustment threshold is updated, and an insulation maintenance operation is performed.

It should be noted that when the time of the insulation state is greater than the second preset time threshold, a temperature adjustment operation is performed. As the air inside the smoothie gradually becomes thinner, different insulation stages of the smoothie are adjusted to prevent the smoothie from becoming thinner or its hardness from decreasing. The design effectively maintains the required hardness of the smoothie to meet the user's smoothie hardness requirement and improve the smoothie's mouthfeel for the user.

The update of the third preset temperature adjustment threshold includes the following step. The third preset temperature adjustment threshold of the current level is updated based on a temperature update rule of the current level, and the second preset time threshold is updated based on a time update rule of the current level.

Furthermore, the temperature update rule of the current level comprises: acquiring, according to a temperature update calculation equation T0=T-T1, a new third preset temperature adjustment threshold of the current level, wherein T0 is the third preset temperature adjustment threshold of the updated current level, T is the third preset temperature adjustment threshold of the current level before updating, and T1 is a temperature adjustment threshold of the current level; and the time update rule of the current level comprises: acquiring, according to a time update calculation equation t0=t+t1, a new second preset time threshold, wherein t0 is the second preset temperature adjustment threshold of the updated current level, t is the second preset time threshold of the current level before updating, and t1 is a time adjustment threshold of the current level.

It should be noted that each time a temperature adjustment is performed, a new third preset temperature adjustment threshold of the current level is calculated according to the above temperature update calculation equation, and a second preset time threshold of the current level is calculated according to the above time update calculation equation. Then, a new insulation maintenance operation is performed based on the third preset temperature adjustment threshold. When the new insulation maintenance operation reaches the new second preset time threshold, a subsequent temperature adjustment operation is performed to achieve maintenance operation for different insulation stages of the smoothie.

S303. It is determined whether the third preset temperature adjustment threshold is less than or equal to a preset level insulation maintenance threshold. If yes, an insulation maintenance operation is performed based on the level insulation maintenance threshold to maintain a current smoothie hardness. If not, the operation returns to the step S302.

It should be noted that when the third preset temperature adjustment threshold of the current level reaches the preset level insulation maintenance threshold of the current level, it means that the third preset temperature adjustment threshold reaches a maintenance temperature required for the current hardness of the smoothie. The insulation operation is performed at this temperature, such that the hardness of the produced ice cream can be maintained at the required hardness level, without being easily affected by other factors and effectively meeting the actual hardness and mouthfeel needs of the user. If not, it means that the third preset temperature adjustment threshold of the current level does not reach the preset level insulation maintenance threshold of the current level. In this case, the temperature adjustment operation is continued until the third preset temperature adjustment threshold is lowered to the level insulation maintenance threshold. For example, the initial third preset temperature adjustment threshold T of the current level is 2°C, the temperature adjustment threshold T1 is 0.4°C, the initial preset time threshold t is 20 min, the time adjustment threshold t1 is 10 min, and the level insulation maintenance threshold is - 2°C. In this condition, after 10 times of temperature adjustment operation are performed, a current preset temperature threshold light will show a value equal to the level insulation maintenance threshold. At this point, the insulation operation enters a final stage, through which a smoothie with a required hardness can be stably made.

The time adjustment threshold can be adjusted according to actual conditions, without increasing the operating time after each temperature adjustment. For example, when the preset time threshold reaches 40, 50, or 60 min, the subsequent preset time threshold remains unchanged or decreases accordingly to a certain time threshold, which is not limited herein.

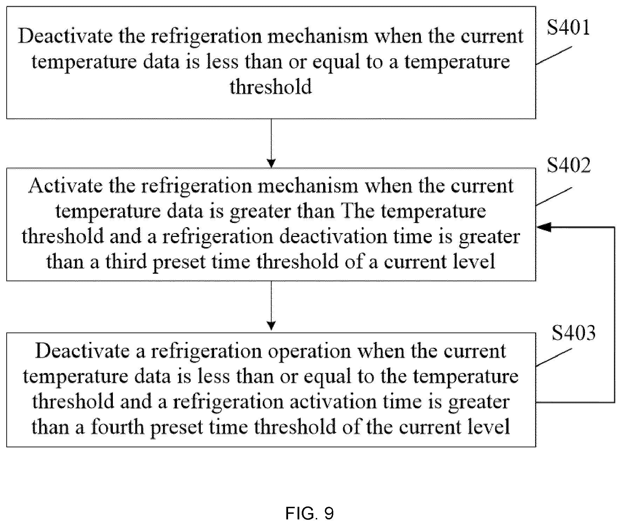

Furthermore, as shown in FIG. 9, the insulation maintenance operation includes the following steps.

S401. The refrigeration mechanism is deactivated when the current temperature data is less than or equal to the temperature threshold.

It should be noted that in the insulation state, when the current temperature data of the detected smoothie is less than or equal to the temperature threshold, it means that the temperature of the smoothie is relatively low in the current insulation stage. **In** this case, the refrigeration operation is deactivated, that is, the compressor is deactivated, to prevent the temperature of the material from being too low and causing excessive refrigeration and energy waste.

S402. When the current temperature data is greater than the temperature threshold and a refrigeration deactivation time is greater than a third preset time threshold of a current level, the refrigeration mechanism is activated.

**It** should be noted that when the refrigeration operation is deactivated, when the detected current temperature data is greater than the temperature threshold and the refrigeration deactivation time is greater than a third preset time threshold of a current level, the refrigeration operation is activated, that is, the compressor is activated to effectively maintain the hardness of the smoothie.

The temperature threshold is a preset temperature threshold or level insulation maintenance threshold of the current level, thereby performing an insulation maintenance operation with different temperature thresholds.

S403. When the current temperature data is less than or equal to the temperature threshold and a refrigeration activation time is greater than a fourth preset time threshold of the current level, the refrigeration operation is deactivated, and the operation returns to the step S402.

It should be noted that when the current temperature data is less than or equal to the temperature threshold and the refrigeration activation time is greater than the fourth preset time threshold of the current level, it means that the current temperature of the smoothie meets the insulation maintenance requirement. In this case, the refrigeration operation is deactivated, and the above insulation maintenance operation is cycled during the insulation stage to ensure that the hardness of the smoothie at the current level meets production and customer needs.

Preferably, the second preset time threshold, the third preset time threshold, and the fourth preset time threshold are set and adjusted according to actual needs.

Preferably, in order to more accurately determine whether the hardness of the smoothie meets the requirement, the smoothie hardness maintenance operation further includes the following steps.

Step 1. A current speed of the motor is acquired in the insulation state in real time.

Step 2. The refrigeration operation is deactivated when the current speed of the motor is greater than or equal to an eighth preset speed.

Step 3. The refrigeration operation is activated when the current speed of the motor is greater than or equal to a ninth preset speed and a temperature activation condition is triggered.

It should be noted that the temperature activation condition is that the current temperature data is greater than the temperature threshold and the refrigeration deactivation time is greater than a fifth preset time threshold of a current level. **The** temperature threshold is a preset temperature threshold or level insulation maintenance threshold of the current level.

The current speed of the variable-speed motor is further acquired in the insulation state in real time. When the current speed of the motor is greater than or equal to the eighth preset speed, it means that the current hardness of the smoothie meets the requirement. In this case, the refrigeration operation is deactivated to avoid excessive hardness of the smoothie and save energy. When the current speed of the motor is greater than or equal to the ninth preset speed and the temperature activation condition is triggered, the refrigeration operation is activated to maintain the hardness of the smoothie. The ninth preset speed is an activation speed, which is greater than the eighth preset speed.

Preferably, the making commands for making smoothies of different raw materials or for making ice creams of different raw materials correspond to different discharge stirring speeds so as to achieve rapid discharge operations for scenarios of making with different raw materials, which can prevent accumulation and improve discharge efficiency.

Overall, in the present disclosure, the refrigeration mechanism is controlled to provide a refrigeration environment of a preset function mode for the making space of the making cartridge based on the temperature data and the input making function command. The variable-speed motor apparatus is controlled to adjust the rotation speed and direction of the stirring paddle in the preset function mode based on the making function command, thereby performing making operations for different cold beverage products. Therefore, the present disclosure meets the needs of the user for multiple uses in one machine.

Meanwhile, the present disclosure adopts different motor stirring control logics in different operating states to avoid local clumps or large particles of the material during production. In this way, the present disclosure can maintain the overall shape and hardness of the material, thereby improving the mouthfeel after discharge and meeting the actual needs of the user.

Secondly, during the stirring process, the solid-liquid mixture will move to the front end of the making cartridge. In order to facilitate the smooth reflux of the solid-liquid mixture at the front end of the making cartridge, the making cartridge further includes a guide portion. The guide portion is gradually tilted from the upper portion of the making cartridge towards the discharge mechanism. In this way, the guide portion can guide the solid-liquid mixture to move upward to the upper portion of the making cartridge and obliquely move to the middle portion of the making cartridge, thereby achieving the reflux of the smoothie. The inner wall of the guide portion forms a concave surface, which is not easy to form a retention corner. Therefore, products like ice creams with smaller particles are less likely to be retained in the guide portion, making it easy for the reflux of the formed small-particle solid-liquid mixture. The design is suitable for the reflux of smoothies and ice creams, and improves the stirring efficiency and effect.

Finally, it should be noted that the above embodiments are merely specific implementations of the present disclosure. They are intended to describe, rather than to limit the technical solutions of the present disclosure. Therefore, the protection scope of the present disclosure is not limited to the above embodiments. Although the present disclosure is described in detail with reference to the above embodiments, it should be understood that those of ordinary skill in the art can still make modifications to or easily conceive changes in the technical solutions described in the above embodiments, or make equivalent substitutions on some technical features therein. These modifications, changes, or substitutions will not cause the essence of the corresponding technical solutions to depart from the scope of the technical solutions of the embodiments of the present disclosure, and shall all fall within the protection scope of the present disclosure. Therefore, the protection scope of the present disclosure should be subject to the protection scope of the claims.

## Claims

1. A cold beverage maker, comprising a body, and a refrigeration mechanism, a stirring mechanism, a feed and discharge mechanism, and a main control apparatus that are provided on the body, wherein the feed and discharge mechanism comprises a making cartridge, a discharge mechanism provided on one end of the making cartridge, and a temperature sensor provided in the making cartridge; and the refrigeration mechanism is configured to refrigerate the making cartridge;
the stirring mechanism comprises a variable-speed motor apparatus and a stirring member; the variable-speed motor apparatus is connected to the stirring member in a transmission manner; and the stirring member is provided in the making cartridge;
the temperature sensor is connected to the main control apparatus, and is configured to detect temperature data inside the making cartridge and send the temperature data to the main control apparatus; and
the main control apparatus is electrically connected to the refrigeration mechanism and the variable-speed motor apparatus, and is configured to: control, based on the temperature data and an input making function command, the refrigeration mechanism to provide a refrigeration environment of a preset function mode for a making space of the making cartridge, and control, based on the making function command, the variable-speed motor apparatus to adjust a rotation speed and direction of the stirring member in the preset function mode, thereby performing making operations for different cold beverage products.

2. The cold beverage maker according to claim 1, wherein the refrigeration mechanism comprises a compressor, a condenser, and an evaporator; the evaporator is provided in the making cartridge and provided with the temperature sensor; and the stirring member surrounds a periphery of the evaporator;
two ends of the compressor are respectively connected to an inlet end of the condenser and an outlet end of the evaporator through tubes; and an outlet end of the condenser is connected to an inlet end of the evaporator; and
an upper or middle-upper portion of the cold beverage maker comprises a stirring region and a driving region in sequence from front to rear; the evaporator, the stirring member, and the making cartridge are provided in the stirring region; the variable-speed motor apparatus is provided in the driving region.

3. The cold beverage maker according to claim 2, wherein the variable-speed motor apparatus comprises the mounting bracket, the variable-speed motor, the reducer, the coupling, and the stirring shaft; and the mounting bracket is provided on the end of the making cartridge away from the discharge mechanism; and
the variable-speed motor, the reducer, and the coupling are sequentially connected and provided on the mounting bracket; and the stirring shaft comprises one end connected to the coupling and the other end passing through the evaporator and connected to a transmission connection portion of the stirring member in a transmission manner.

4. The cold beverage maker according to claim 2, wherein an upper or middle-upper portion of the cold beverage maker further comprises a driving heat dissipating region; and the driving region is provided between the stirring region and the driving heat dissipating region;
the main control apparatus comprises a main controller and a control panel; and the control panel is connected to the main controller, and is configured to send a function control command input by a user to the main controller;
the making cartridge comprises a guide portion; the guide portion is provided on an end close to the discharge mechanism inside the making cartridge; the guide portion is gradually tilted from an upper portion of the making cartridge towards the discharge mechanism; and an inner wall of the guide portion forms a concave surface;
a transition connection portion is provided between an outer wall of the making cartridge and a feed port of the making cartridge; and the transition connection portion gradually extends from the outer wall of the making cartridge towards the feed port; and
the transition connection portion presents an arc-shaped or inclined transition; and a surface of the transition connection portion is a smooth surface.

5. The cold beverage maker according to claim 4, wherein a width of the transition connection portion gradually increases from the outer wall of the making cartridge towards the feed port; and alternatively, the width of the transition connection portion gradually decreases from the outer wall of the making cartridge towards the feed port.

6. The cold beverage maker according to claim 4, wherein the end close to the discharge mechanism inside the making cartridge is provided with a side end surface; the discharge mechanism is provided on the side end surface; an upper portion of the side end surface is connected to a lower portion of the guide portion to form a first connection line; an upper side wall of the making cartridge is connected to an upper portion of the guide portion to form two second connection lines; the two second connection lines are symmetrically inclined and bent from a top of the making cartridge to two sides of the guide portion; and the two second connection lines intersect with each other at one end, and the other ends of the two second connection lines are respectively bent and extend towards the two sides of the guide portion and are respectively connected to two ends of the first connection line; and
the making cartridge further comprises a feed portion; the transition connection portion protrudes upward from a surface of the making cartridge, and is provided on an end away from the discharge mechanism inside the making cartridge; the feed port is provided on the feed portion; the feed portion is provided on the transition connection portion; the transition connection portion is internally provided with a feed chamber; the feed chamber communicates with a storage space; a size range of a longitudinal section of the feed chamber is greater than a size range of a longitudinal section of the storage space.

7. The cold beverage maker according to claim 6, wherein the discharge mechanism comprises a discharge hopper, a handle, and a discharge valve; the discharge hopper is provided on the side end surface; the side end surface is provided with a discharge port; the discharge port communicates with the discharge hopper; one end of the handle comprises one side hinged to the discharge hopper and the other side hinged to the discharge valve; and the handle is able to drive the discharge valve to rise or fall so as to open or close the discharge hopper.

8. A control method of a cold beverage maker, applied to the cold beverage maker according to any one of claims 1-7, and comprising:
acquiring current temperature data inside the making cartridge and a current making function command in real time, wherein the current making function command is any one of making function commands for different cold beverage products;
pairing the current making function command with a preset function hardness level control library to acquire a function hardness level control rule set for a corresponding making function, wherein the function hardness level control rule set comprises a function making command, a preset shape triggering rule, and a preset forming triggering rule for a corresponding hardness level;
activating the refrigeration mechanism, and controlling the variable-speed motor to perform a stirring operation at the corresponding hardness level based on the function making command;
controlling, when the current temperature data meets the preset shape triggering rule, the variable-speed motor to perform a shape adjustment operation at the corresponding hardness level; and
controlling, when the current temperature data meets the preset forming triggering rule, the variable-speed motor and the refrigeration mechanism to perform a hardness maintenance operation at the corresponding hardness level.

9. The control method of a cold beverage maker according to claim 8, wherein the current making function command comprises a current function command and a current hardness level command; and the pairing the current making function command with a preset function hardness level control library to acquire a function hardness level control rule set for a corresponding making function comprises:
pairing the current function command with the preset function hardness level control library to acquire a hardness level control library for the corresponding making function; and
pairing the current hardness level command with the hardness level control library to acquire a corresponding function hardness level control rule set.

10. The control method of a cold beverage maker according to claim 8, wherein the controlling the variable-speed motor to perform a stirring operation at a corresponding hardness level based on the function making command comprises:
controlling, when the function making command is an ice cream making command, the variable-speed motor to perform a stirring operation at a first preset speed and a single stirring direction; and
controlling, when the function making command is a smoothie making command, the variable-speed motor to perform a stirring operation at a second preset speed and a single stirring direction.

11. The control method of a cold beverage maker according to claim 8, wherein the controlling, when the current temperature data meets the preset shape triggering rule, the variable-speed motor to perform a shape adjustment operation at the corresponding hardness level comprises:
determining, when the preset shape triggering rule is an ice cream preset shape triggering rule, whether the current temperature data is within a first preset temperature threshold range; and if yes, determining that the ice cream preset shape triggering rule is met, and controlling the motor to perform a stirring operation at a third preset speed by alternately switching forward and reverse stirring directions at a first preset time interval; and
determining, when the preset shape triggering rule is a smoothie preset shape triggering rule, whether the current temperature data is within a second preset temperature threshold range; and if yes, determining that the smoothie preset shape triggering rule is met, and controlling the motor to perform a stirring operation at a fourth preset speed by alternately switching the forward and reverse stirring directions at a second preset time interval.

12. **The** control method of a cold beverage maker according to claim 8, wherein the controlling, when the current temperature data meets the preset forming triggering rule, the variable-speed motor and the refrigeration mechanism to perform a hardness maintenance operation at the corresponding hardness level comprises:
determining, when the preset forming triggering rule is an ice cream preset forming triggering rule, whether the current temperature data is within a third preset temperature threshold range; and if yes, determining that the ice cream preset forming triggering rule is met, and performing an ice cream hardness maintenance operation; and
determining, when the preset forming triggering rule is a smoothie preset forming triggering rule, whether the current temperature data is within a fourth preset temperature threshold range; and if yes, determining that the smoothie preset forming triggering rule is met, and performing a smoothie hardness maintenance operation.

13. The control method of a cold beverage maker according to claim 12, wherein the ice cream hardness maintenance operation comprises the following steps:
S1: deactivating the refrigeration mechanism and the variable-speed motor, and calculating a deactivation time;
S2: controlling, when the deactivation time reaches a first preset time threshold, the variable-speed motor to perform a stirring operation at a fifth preset speed and a single stirring direction;
S3: determining whether the current temperature data is less than a first preset temperature adjustment threshold;
if yes, initializing the deactivation time, and returning to the step S1; and
if not, activating the refrigeration mechanism, and controlling the variable-speed motor to perform a stirring operation at a sixth preset speed by alternately switching the forward and reverse stirring directions at a third preset time interval; and
S4: determining whether the current temperature data is less than a second preset temperature adjustment threshold; if yes, initializing the deactivation time, and returning to the step S1; and if not, continuing to activate the refrigeration mechanism, controlling the variable-speed motor to perform a stirring operation at a seventh preset speed by alternately switching the forward and reverse stirring directions at a fourth preset time interval, and returning to the step S4; and
alternatively, the smoothie hardness maintenance operation comprises the following steps:
S10: performing an insulation maintenance operation based on a third preset temperature adjustment threshold, and measuring a time of an insulation state;
S20: updating, when the time of the insulation state is greater than a second preset time threshold, the third preset temperature adjustment threshold, and performing an insulation maintenance operation; and
S30: determining whether the third preset temperature adjustment threshold is less than or equal to a preset level insulation maintenance threshold; if yes, performing an insulation maintenance operation based on the level insulation maintenance threshold to maintain a current smoothie hardness; and if not, returning to the step S20.

14. **The** control method of a cold beverage maker according to claim 13, wherein the insulation maintenance operation comprises the following steps:
S101: deactivating the refrigeration mechanism when the current temperature data is less than or equal to a temperature threshold;
S102: activating the refrigeration mechanism when the current temperature data is greater than the temperature threshold and a refrigeration deactivation time is greater than a third preset time threshold of a current level; and
S103: deactivating the refrigeration mechanism when the current temperature data is less than or equal to the temperature threshold and a refrigeration activation time is greater than a fourth preset time threshold of the current level, and returning to the step S102;
wherein, the temperature threshold is the third preset temperature adjustment threshold or the level insulation maintenance threshold;
the updating the third preset temperature adjustment threshold comprises:
updating the third preset temperature adjustment threshold of the current level based on a temperature update rule of the current level, and updating the second preset time threshold based on a time update rule of the current level;
wherein, the temperature update rule of the current level comprises:
acquiring, according to a temperature update calculation equation T0=T-T1, a new third preset temperature adjustment threshold of the current level, wherein T0 is the third preset temperature adjustment threshold of the updated current level, T is the third preset temperature adjustment threshold of the current level before updating, and T1 is a temperature adjustment threshold of the current level; and
the time update rule of the current level comprises:
acquiring, according to a time update calculation equation t0=t+t1, a new second preset time threshold, wherein t0 is the second preset temperature adjustment threshold of the updated current level, t is the second preset time threshold of the current level before updating, and t1 is a time adjustment threshold of the current level.

15. The control method of a cold beverage maker according to claim 13, wherein the smoothie hardness maintenance operation further comprises:
acquiring a current speed of the motor in the insulation state in real time;
deactivating a refrigeration operation when the current speed of the motor is greater than or equal to an eighth preset speed; and
activating the refrigeration operation when the current speed of the motor is greater than or equal to a ninth preset speed and a temperature activation condition is triggered;
wherein, the temperature activation condition is that when the current temperature data is greater than the temperature threshold and the refrigeration deactivation time is greater than a fifth preset time threshold of a current level, the temperature threshold is a preset temperature threshold or level insulation maintenance threshold of the current level.
